# EUROPEAN PATENT SPECIFICATION

(11) **EP 3 724 486 B1**
(45) Date of publication and mention of the grant of the patent: **31.05.2023**
(21) Application number: 18811842.6
(22) Date of filing: 07.12.2018
(51) Int. Cl.: F03D 1/06

(54) **A WIND TUBINE BLADE LEADING EDGE DEVICE AND METHOD OF INSTALLING THE LEADING EDGE DEVICE**
EINE WINDKRAFTANLAGEN-VORDERKANTENVORRICHTUNG UND EIN VERFAHREN ZUM INSTALLIEREN DER VORDERKANTENVORRICHTUNG
DISPOSITIF DE BORD D'ATTAQUE DE PALE D'EOLIENNE ET PROCÉDÉ D'INSTALLATION DU DISPOSITIF DE BORD D'ATTAQUE

(30) Priority: 12.12.2017 EP 17206722
(43) Date of publication of application: 21.10.2020
(73) Proprietor: LM Wind Power A/S, 6000 Kolding (DK)
(72) Inventor: HERTEL NILSSON VAN KALKEN, Jordy, 6640 Lunderskov (DK); MADSEN, Jesper, 6621 Gesten (DK)
(74) Representative: COPA Copenhagen Patents
(86) International application number: PCT/EP2018/083916
(87) International publication number: WO 2019/115372

(56) References cited:
- EP-A1- 2 801 720
- EP-A1- 3 144 525
- WO-A1-2016/189278
- WO-A1-2018/149970
- US-A1- 2011 006 165
- US-A1- 2011 142 678

## Description

### Technical field

The present invention relates to a wind turbine blade with an attached leading edge device.

The present invention further relates to a method of installing the leading edge device.

### Background

It is well-known that the leading edge area of a wind turbine blade is subjected to various weather and environmental conditions, such as high winds, hails, dusts, salt sprays, etc. A protective coating or tape may be applied to the leading edge area.

Field experiences have shown that such erosion coating or tape will last approximately between 5 to 8 years. However, the coating or tape may rupture due to heavy erosion and thereby flutter freely in the wind. This will result in a loss of aerodynamic performance and generation of added aerodynamic noise. Service operations are thus required to remove the ruptured erosion shield and further repairing any cracks or failures in the exposed blade surface, before applying a new erosion shield. Such extensive and complex service operations require the wind turbine to be taken out of operation, thereby increasing the downtime and loss of annual energy production (AEP).

In an attempt to increase the time between service operations, a multi-layered erosion shield can be attached to or integrated into the leading edge area of the wind turbine blade. WO 2013/092211 A1 discloses such a multi-layered erosion shell where the outermost layer is able to passively peel off or rupture during operation to maintain a relative smooth outer surface. WO 2017/012632 A1 discloses another multi-layered erosion shell comprising two layers of thermoplastic materials, wherein the inner layer is optimised for integration with the blade shell and the outer layer is optimised for erosion resistance.

It is further known that the aerodynamic performance of the wind turbine blade can be improved by attaching aerodynamic devices to the leading edge. The aerodynamic devices may extend further along the pressure side and/or the suction side. These aerodynamic devices modifies the airflow over the wind turbine blade and are normally specifically designed for a particular purpose, such as delaying stall, improving the tip vortex energy or enhancing the lift-to-drag ratio. Alternatively, the wind turbine blade can be manufactured with a specially designed leading edge profile integrated into the blade shell.

US 2013/0056585 A1 discloses an aircraft blade with a continuous array of tubercle shaped protrusions, between which a convex or concave surface is formed. EP 1805412 B1 discloses an array of individually spaced tubercles which can be integrated into the blade shell or attached to the leading edge of the blade shell.

Wind turbine blades with such integrated leading edge profiles require very time-consuming, labour-intensive, and expensive manufacturing steps as well as surface preparations in order to apply the protective coating. The integrated leading edge profiles also require the use of specially designed erosion shells due to their complex surface profiles, thereby increasing the complexity and costs of manufacturing such erosion shields.

US 2009/0220795 A1 discloses a multi-layered coating system suitable for application on the leading edge area of a wind turbine blade. The multi-layered coating system is optimised to reduce the amount of surface preparation required before applying the protective coating.

US 2011/0008174 A1 discloses F-shaped elastomeric vortex generator attached to the leading edge area of an aerodynamic blade. The complexity and time for preparing the leading edge surface for attachment of such vortex generators is increased if a leading edge protection is applied first. Further, the vortex generator may weaken the leading edge protection, if erosion resistant material or gelcoat is removed before attaching the vortex generator.

US 2011/0006165 A1 relates to a method of improving aerodynamic performance of foils by the application of conformal, low drag vortex generators, wherein a film of erosion protection material or other conformal material is placed on the foil to provide a medium for the incorporation of planform edge vortex generators.

### Object of the invention

An object of the invention is to provide a wind turbine blade and method that solve the abovementioned problems.

Another object of the invention is to provide a wind turbine blade and method that saves time and costs when manufacturing a wind turbine blade with a leading edge protection combined with a complex leading profile.

Another object of the invention is to provide a wind turbine blade and method that reduces the downtime and increases the operational lifetime.

A further object of the invention is to provide a wind turbine blade and method that increase the flexibility when upgrading existing wind turbine blades.

Another further object of the invention is to provide a wind turbine blade and method that save time and costs when repairing wind turbine blades having a complex leading edge profile.

### Detailed description of the invention

One object of the invention is further achieved by a wind turbine blade for a wind turbine, the wind turbine blade comprising at least one blade section extending in a longitudinal direction from a blade root or a tip end to an opposite end and further in a chordwise direction from a leading edge to a trailing edge, the wind turbine blade having a length of at least 35 meters measured between the blade root and the tip end, wherein the wind turbine blade has a first side surface defining a pressure side and a second side surface defining a suction side, wherein a leading edge surface is arranged between the first and second side surfaces, wherein a leading edge device is arranged at said leading edge surface, the leading edge device for the wind turbine blade or the blade section comprising an erosion shield extending in a longitudinal direction from a first end to a second end and further in a circumference direction from a first edge to a second edge, the erosion shield has an inner surface and an opposite facing outer surface arranged between said first and second ends, wherein the erosion shield is configured to be attached to a leading edge surface of the wind turbine blade characterised in that at least one airflow modifying element projects from said outer surface, the at least one aerodynamic element having a first profile, wherein said at least one airflow modifying element and said erosion shield are integrally formed.

In other words, the present invention relates to a a wind turbine blade for a wind turbine, the wind turbine blade comprising at least one blade section extending in a longitudinal direction from a blade root or a tip end to an opposite end and further in a chordwise direction from a leading edge to a trailing edge, the wind turbine blade having a length of at least 35 meters measured between the blade root and the tip end, wherein the wind turbine blade has a first side surface defining a pressure side and a second side surface defining a suction side, wherein a leading edge surface is arranged between the first and second side surfaces, wherein a leading edge device is arranged at said leading edge surface, the leading edge device for the wind turbine blade or the blade section comprising an erosion shield extending in a longitudinal direction from a first end to a second end and further in a circumference direction from a first edge to a second edge, the erosion shield has an inner surface and an opposite facing outer surface arranged between said first and second ends, wherein the erosion shield is configured to be attached to a leading edge surface of the wind turbine blade characterised in that at least one airflow modifying element projects from said outer surface, the at least one airflow modifying element having a first profile, wherein said at least one airflow modifying element and said erosion shield are integrally formed.

This provides alternative leading edge device with combined leading protection and aerodynamic effect. The present configuration allows aerodynamic elements of various types and sizes to be incorporated into the leading edge protection to form an integrated device. This saves manufacturing time and costs as the leading edge profile of the wind turbine can be manufactured with a basic leading edge profile. The present configuration also allows for a more versatile upgrade of existing wind turbine blades.

In a preferred embodiment, at least one of the airflow modifying elements protrudes from the outer surface of the erosion shield. In some embodiments, all of the airflow modifying elements protrude from the outer surface of the erosion shield. The airflow modifying elements are preferably regularly spaced on the leading edge device.

It is thus preferred that the leading edge device comprises one or more raised surfaces or one or more local maxima in its outer surface, wherein the raised surfaces or local maxima are constituted by the airflow modifying elements.

According to a preferred embodiment, the airflow modifying elements are covered by a layer of material, wherein the same layer of material covers all airflow modifying elements. It was found that such design provides improved structural integrity while being simple and cost-effective. In some embodiments the airflow modifying elements are covered by a first layer of material, wherein the first layer of material is covered by a second layer of material.

It is preferred that the leading edge device comprises between 2 and 20 airflow modifying elements, such as between 5 and 15, or between 5 and 10 airflow modifying elements.

The leading edge element is preferably formed as an erosion shield comprising a number of layers arranged in a stack. The erosion shield extends in a longitudinal direction from a first end to a second end and further in a circumference direction from a first edge to a second edge. The erosion shield has an inner surface configured to contact a leading edge surface of the wind turbine blade. The erosion shield further has an outer surface facing away from the wind turbine blade, when installed. The length and width, i.e. in the circumference direction, may be selected dependent of the aerodynamic profile and geometrical dimensions of the wind turbine blade. This provides an erosion resistant structure protecting the blade surface against cracking and failures.

The first and second ends may have a curved or tapered end profile seen in length direction, a curved or convex end profile seen in width direction, and/or integrated serrations for reducing the negative aerodynamic effect on the spanwise local airflow.

According to one embodiment, said at least one airflow modifying element extends along the outer surface in at least the length or circumference direction, wherein said first profile has a local thickness extending from said outer surface to a local outer surface of the at least one airflow modifying element.

The airflow modifying elements are configured to modify the airflow over the wind turbine blade. For example, the airflow modifying elements may be shaped to improve the lift-to-drag ratio of the wind turbine blade. The airflow modifying element may have any suitable two-dimensional or three-dimensional shaped body extending in the longitudinal direction and/or in the circumference direction. Once installed, the aerodynamic performance of the wind turbine blade can be improved.

The airflow modifying element may have a body with a local thickness or height measured between the outer surface of the erosion shell and the local outer surface of the airflow modifying element. The local thickness may be constant or vary along the length and/or the width of the airflow modifying element. Alternatively, the local thickness may taper off towards one or more local ends and/or one or more local edges.

Further, the erosion shield may have a local thickness or height measured between the outer surface and the inner surface. The local thickness may be constant or vary along the length and/or the width of the erosion shield. Alternatively, the local thickness may taper off towards the first and second ends and/or the first and second edges.

According to one embodiment, said first profile forms a substantially two-dimensional shaped body extending substantially in the circumference direction.

The airflow modifying element may have a substantially two-dimensional (2D) shaped body, e.g. an elongated profile, extending substantially in a local longitudinal direction and a local thickness direction. The body may have a substantially constant width measured along its local length. This 2D shaped body may arranged relative to the circumference direction so that it extends parallel to the circumference or longitudinal direction or are positioned in an inclined angle relative to the circumference or longitudinal direction. For example, the airflow modifying element may be formed as a fence, a strip, a fin, a vane or another suitable 2D shape. For example, the airflow modifying element may have a straight or curved body.

This configuration may be suited for preventing spanwise airflow over the wind turbine blade. This configuration may also be suited for guiding the airflow towards the trailing edge or the tip end dependent on the spanwise position of the airflow modifying element on the wind turbine blade. This configuration may in some instances also transform the laminar airflow into a turbulent airflow and in turn delay the airflow separation.

In a special configuration, the airflow modifying element may form one part of a combined aerodynamic element extending further along the pressure side and/or the suction side. This combined aerodynamic element may optionally extend along the entire circumference of the wind turbine blade. For example, a second part of the combined aerodynamic element may extend along the pressure side and a third part of the combined aerodynamic element may extend along the suction side. The second and third parts may optionally be connected at the trailing edge to form a continuous element.

According to one embodiment, said first profile forms a substantially three-dimensional shaped body extending in the longitudinal direction and further in the circumference direction.

Alternatively, the airflow modifying element may have a substantially three-dimensional (3D) shaped body, e.g. a complex shaped profile, extending substantially in a local longitudinal direction, a local width direction and a local thickness direction. The local thickness may vary as function of the local width and/or the local length. This 3D shaped body may be arranged relative to, e.g. aligned with, the leading edge of the wind turbine blade. For example, the airflow modifying element may be formed as a bump, a tubercle, a serration or another suitable 3D shape.

The present invention is particularly suited for manufacturing leading edge devices having complex 3D profile. Conventional lay-up processes only allows for the production of leading edge profile having a substantially 2D profile. This allows the body of these aerodynamic elements to be manufactured using a more optimal process, thereby reducing lay-up time and manufacturing costs.

According to a special embodiment, said body is covered with a protective coating and/or covered with a laminate of layers.

The body of the airflow modifying elements may optionally be covered with a coating and/or one or more outer layers. This allows the local outer surfaces of the airflow modifying elements be protected against environmental erosions and impacts, thereby increasing the service intervals and the lifetime of the leading edge device. The above coating and/or outer layers may form part of the erosion shield or form an additional erosion protection.

The body may be made of any suitable plastic or thermoplastic materials or any foam materials, such as polymer; polyamide; polyester; polypropylene; polystyrene; polyurethane; polyethylene; PVC or epoxy; elastomer or resin. For example, but not limited to, acrylonitrile butadiene styrene (ABS); polylactic acid (PLA); polyethylene (e.g. HDPE); SLS Nylon^{®}; rigid opaque plastics (e.g. Vero) or rubber-like plastics (e.g. Tango or Agilus). The body may also be made of a fibre-reinforced material or composite, such as fibre-reinforced Nylon^{®} or fibre-reinforced polymer, wherein said fibres may be made of carbon, glass, aramid or Kevlar^{®}.

Preferably, the body may be made of a resistant material which substantially absorbs erosion forces over time. This allows the body to function as an erosion resistant structure. The body may also be made of a flexible material which substantially absorbs impact shock waves from particles hitting the airflow modifying device. This allows the body to function as a cushioning structure.

The coating may be a gelcoat comprising polymer, urethane, polyester or another suitable material or mixture of materials. Additionally or alternatively, the coating may comprise an ultraviolet (UV) resistant material for protection against UV radiations.

The erosion shield may comprise single layer or a plurality of layers arranged in a stack. The erosion shield may for example comprise one or more inner layers and one or more outer layers and, optionally, one or more intermediate layers arranged between the inner layers and the outer layers. This provides a multi-layered erosion shield, wherein each layer may be optimised for a particular purpose.

The inner layer may be made of a material selected to provide a strong attachment to the fibre material and/or resin of the blade shell. Alternatively or additionally, the inner layer may be made of a flexible material, as mentioned above, for providing a cushioning effect. An adhesive layer may optionally be provided between the leading edge surface and the inner layer for securing a strong attachment of the leading edge device to the fibre material and/or resin of the blade shell. Alternatively, the inner layer may be formed by the body of the airflow modifying elements. Alternatively, the inner layer may extend between the individual airflow modifying elements and further along the local outer surfaces of the body of each airflow modifying element.

The outer layer may be made of an erosion resistant material, as mentioned above, for protecting at least the leading edge surface of the wind turbine blade. The outer layer may extend along the entire inner layer, wherein the body of the airflow modifying elements is projecting from said outer layer. Alternatively, the outer layer may extend along the inner layer between the individual airflow modifying elements and further along the local outer surfaces of each airflow modifying element. Alternatively, the outer layer may be formed by the body of the airflow modifying elements.

The intermediate layer may be made of a cushioning material, as mentioned above. The intermediate layer may extend along the entire inner and outer layers. Alternatively, the intermediate layer may extend along the inner layer and further along the local outer surfaces of each airflow modifying elements. Alternatively, the intermediate layer may be formed by the body of the airflow modifying elements.

According to one embodiment, said at least one airflow modifying element comprises an array of airflow modifying elements arranged along the outer surface.

The leading edge device may comprise a number of airflow modifying elements distributed along the erosion shield in the longitudinal direction and/or the circumference direction. For example, the leading edge device may a single airflow modifying element or an array of airflow modifying elements. The number of airflow modifying elements may dependent on the length and/or width of the leading edge device. The airflow modifying elements may be individually spaced apart along the erosion shield by a constant or variable distance. Alternatively, the airflow modifying elements may be interconnected to form a continuous structure. The distance between the airflow modifying elements may be selected based on the dimensions thereof and/or the aerodynamic profile and geometrical dimensions of the wind turbine blade. This allows for an optimised configuration of the airflow modifying elements.

According to a special embodiment, the first profile of said array of airflow modifying elements varies along the longitudinal direction and/or the circumference direction.

The profile of each airflow modifying element may be uniform along the longitudinal direction and/or the circumference direction. Alternatively, the profile of each airflow modifying element may vary along the longitudinal direction and/or the circumference direction. For example, a first airflow modifying element and at least a second airflow modifying element may be arranged on the erosion shield. The first airflow modifying element may have a first profile and the second airflow modifying element may have a second profile that differs from the first profile. Said first and second profiles may differ in length, height and/or width.

The erosion shield may have a substantially uniform local thickness in longitudinal direction and/or the circumference direction. Alternatively, the thickness of the erosion shield may be tapered off within a peripheral edge area. The erosion shield may have a substantially outer surface that is substantially parallel to the inner surface. Alternatively, the outer surface may have a convex profile in at least circumference direction relative to the inner surface so that a maximum local thickness is located at the centre of the erosion shield. This allows the erosion shield to have a minimal negative effect on the aerodynamic performance of the wind turbine blade.

In another aspect, the present invention relates to a leading edge device for a wind turbine blade or a blade section comprising an erosion shield extending in a length direction from a first end to a second end and further in a width direction from a first edge to a second edge, the leading edge device has an inner surface and an opposite facing outer surface arranged between said first and second ends, the inner surface facing a leading edge surface of the wind turbine blade, when installed, wherein said leading edge device is configured to be attached to the wind turbine blade, wherein at least one protrusion projects from said outer surface in a thickness direction, when installed, the at least one protrusion having a first profile formed by a body, wherein said at least one protrusion and said erosion shield are integrally formed, the leading edge device further has at least one layer covering at least a portion of said outer surface.

In a preferred embodiment, said body is a three-dimensional shaped body having a local thickness, a local length and a local width, wherein said local thickness varies along the local length and the local width.

In another embodiment said body is an elongated body having a local length, a local width and a local thickness, wherein said elongated body extends in at least one direction.

In another aspect, the present invention relates to an erosion protection device configured to be arranged on the leading edge of a rotor blade such that the erosion protection device extends generally in a spanwise direction along at least part of the rotor blade, wherein the erosion protection device comprises a curved outer surface extending between a first edge and a second edge of the erosion protection device for shielding at least part of the leading edge of the rotor blade, wherein the outer surface is undulated to form a plurality of peaks and valleys. In another aspect, the present invention relates to a rotor blade assembly comprising a rotor blade, such as a wind turbine rotor blade, having a pressure side, a suction side, a leading edge, and a trailing edge extending between a tip and a root, wherein the rotor blade assembly further comprises at least one of said erosion protection devices arranged on the leading edge of the rotor blade such that the erosion protection device extends generally in a spanwise direction along at least part of the rotor blade. The first edge is preferably arranged at the suction side of the rotor blade, and the second edge is preferably arranged at the pressure side of the rotor blade. The undulated outer surface of the erosion protection device preferably comprises, or is made up of, an outer coating. Preferably, the undulated outer surface is a unitary surface such that the entire surface is comprised of the same material.

The erosion protection device usually has an inner surface, opposing the outer surface, wherein the inner surface is shaped to conform to a blade surface along its leading edge. The peaks of the undulated outer surface of the erosion protection device are advantageously configured to alter the aerodynamic characteristics of the rotor blade. The first and/or the second edge may be provided as respective straight edges. In other embodiments, the first and/or the second edge may be serrated. The serrations may be shaped to further improve the airflow over the first and second edges.

The erosion protection device may be arranged along 20% to 100%, preferably between 40% to 100%, of the blade length measured between the blade root and the blade tip. Each peak of the undulated outer surface may be formed by a core material, which may be sandwiched between one or more outer coatings or layers and one or more inner layers.

One object of the invention is also achieved by a wind turbine blade for a wind turbine, the wind turbine blade comprising at least one blade section extending in a longitudinal direction from a blade root or a tip end to an opposite end and further in a chordwise direction from a leading edge to a trailing edge, the wind turbine blade having a length of at least 35 meters measured between the blade root and the tip end, wherein the wind turbine blade has a first side surface defining a pressure side and a second side surface defining a suction side, wherein a leading edge surface is arranged between the first and second side surfaces, characterised in that a leading edge device as described above is arranged at said leading edge surface.

This provides a wind turbine blade with a complex leading edge profile that is integrated into the leading edge protection. This saves manufacturing time and costs as the wind turbine blade is advantageously manufactured with a basic leading profile, thereby simplifying the lay-up process of the layers forming the leading edge profile. This further allows for the desired leading profile to be integrally formed in the leading edge device, thereby allowing for a more controlled and optimal manufacture of the complex leading edge profile. The present leading edge device allows the aerodynamic performance of the wind turbine blade to be improved.

The wind turbine blade may be formed as a full-span blade or a modular blade having an inner blade section and an outer blade section. The wind turbine blade may comprise two shell parts jointed together to form the profile of the wind turbine blade. The blade shell at the leading edge area may comprise a laminate of fibre layers impregnated with resin which is later cured.

The leading edge surface may be flushed with adjoining blade surfaces to form a continuous blade surface. A sealant or a filler material may be applied along the transition area between the leading edge device and the wind turbine blade to form a smooth transition between the outer surface of the erosion shield and the adjacent blade surface. This reduces the negative aerodynamic effect of the erosion shield.

Alternatively, the leading edge surface may comprise a recess shaped to partly or fully receive the erosion shield of the leading edge device. The leading edge device may be attached to the wind turbine blade by welding or adhesion. For example, using a plastic welding process, such as laser welding; hot gas welding, e.g. heat sealing; speed tip welding; spot welding; contact welding; hot plate welding; ultrasonic welding; high frequency welding or solvent welding. For example, by mechanical adhesion; chemical adhesion; dispersive adhesion or diffusive adhesion. Such welding and adhesion techniques are well known and will not be described further in details.

The leading edge device may also be attached by over-lamination, wherein one or more fibre layers are laid up along the transition area. The fibre layers may be laid up in a combined recess formed by a local recess in the blade surface aligned with another local recess in the outer surface of the leading edge device. The fibre layers are then impregnated with resin and cured to provide a strong attachment. Additionally or alternatively, the inner layer of the erosion shield may be attached to fibre material and/or resin of the blade shell by the above welding or adhesion. This also reduces the negative aerodynamic effect of the erosion shield.

The wind turbine blade has a blade length of at least 35 metres, preferably over 50 metres. One or more leading edge devices may be arranged along a part of the leading edge. Each leading edge device may have a length of up to 10 metres, preferably up to 5 metres, e.g. between 10 centimetre and 1 metre. The leading devices may be arranged between 20% to 100% of the blade length measured from the blade root, preferably between 40% to 100%, e.g. between 60% to 100%, of the blade length.

One example not part of the invention shows a method of manufacturing a leading edge device, comprising the steps of:
- providing an erosion shield extending in a longitudinal direction from a first end to a second end and further in a circumference direction from a first edge to a second edge, the erosion shield has an inner surface and an opposite facing outer surface arranged between said first and second ends, wherein the erosion shield is configured to be attached to a leading edge surface of the wind turbine blade,
- providing at least one airflow modifying element comprising a body with a first profile, the body having at least one local outer surface,
- integrating said erosion shield and said at least one airflow modifying element to form the leading edge device.

This provides alternative method of providing a leading edge device as the leading edge protection is manufactured with integrated aerodynamic elements. This allows for the complex leading profile of a wind turbine blade to be manufactured in a fast and simple process. The shape of the airflow modifying elements may thus be manufactured and/or machined into a finished shape under more controlled conditions, thus allowing for the use of an optimised process, such as 3D-printing and/or 3D-machining.

Integrating the airflow modifying elements into the erosion shell allows for a seamless attachment and saves time and costs if repairs of the complex leading profile are needed. This also allows for an improved erosion protection of the complex leading profile.

The present method eliminates the step of preparing the outer surface of the erosion shield before attaching the airflow modifying elements, as required in EP 1805412 B1 and in US 2011/0008174 A1. Other conventional methods, such as applying a protective coating as disclosed in US 2009/0220795 A1, require the complex leading profile to be integrated into the blade shell. This complicated and labour intensive manufacturing process is also eliminated by the present method as the complex leading profile is formed by the leading edge device.

According to one embodiment, said erosion shield and said at least one airflow modifying element are manufactured as a single piece in a common process, or as individual pieces in separate processes.

The body of the airflow modifying elements may be manufactured in an optimised process and later integrated into the leading device in another process. For example, the body may be formed in an extrusion process, a vacuum forming process, an injection moulding process or in another optimised process. The elements may, if needed, be cut into the desired length to form the finished elements. This allows the airflow modifying elements and in turn the complex leading edge profile to be manufactured in a fast and simple process, thereby saving time and costs.

The finished elements may optionally be shipped or transported to another site for final assembling the leading edge device. This allows the airflow modifying elements to be manufactured under controlled conditions and then integrated into the erosion shield in an optimised process.

Alternatively, the body of the airflow modifying elements may be manufactured and integrated into the leading device in a combined process. The airflow modifying elements may thus be integrated during the manufacture of the erosion shield. This allows the leading edge device to be manufactured and assembled at the same site, e.g. at a production line separate from the blade moulding line.

According to a special embodiment, at least a part of the at least one airflow modifying device is manufactured by three-dimensional printing and/or by three-dimensional machining of a base element. According to the present invention, the base element may have wider production tolerances than known base elements for erosion shields due to the provision of the airflow modifying elements overlaying the underlying geometry. This renders the base element more cost-effective and reliable than known structures.

The airflow modifying elements may advantageously be formed directly in a 3D-printing process or in a 3D-machining process. Alternatively, the selected plastic or foam material may be 3D-printed into a base element substantially having the desired profile. The base element may then be 3D-machined to form the finished elements. This also allows the airflow modifying elements and in turn the complex leading edge profile to be manufactured in a fast and simple process, thereby saving time and costs.

According to one embodiment, the at least one airflow modifying element is sandwiched between layers of the erosion shield or attached to a layer of the erosion shield.

The body of the airflow modifying elements may be arranged between different layers of the erosion shield to form an integrated device. For example, between the inner and outer layers of the erosion shield, or between a first outer layer and a second outer layer of the erosion shield. The different layers of the leading edge device may be attached to each other and further to the body of the airflow modifying elements. For example, the attachment may be done by adhesion, welding or another suitable technique. This allows for a seamless attachment which reduces the risk of the airflow modifying elements separating under heavy erosions.

The body of the airflow modifying elements may also be attached to a layer of the erosion shield. For example, the inner layer or the outer layer of the erosion shield. The attachment may be done by adhesion, welding or another suitable technique.

According to one embodiment, the method further comprises at least:
- applying a protective coating over at least one of said outer surface and said at least one local outer surface, or
- laying up at least one outer layer of a protective material over at least one of said outer surface and said at least one local outer surface.

A protective coating, as mentioned above, may be applied over the outer surface of the erosion shield and further over the local outer surfaces of the airflow modifying elements. This provides a substantially seamless transition between the airflow modifying elements and the erosion shield. This also protects the outer surface of the airflow modifying elements.

Alternatively or additionally, one or more outer layers may be laid up over at least the local outer surfaces of the airflow modifying elements. For example, at least the outer layer and/or the intermediate layer of the erosion shield may extend along the outer surface and further over the body of the airflow modifying elements. Alternatively, all layers of the erosion shield may extend along the outer surface and further over the body of the airflow modifying elements. This allows the erosion shield to enclose or conform to the body of the airflow modifying elements while at the same time conforming to the shape of the leading edge surface.

For example, an additional outer layer of an erosion resistant material and/or an additional intermediate layer of a cushioning material may extend over at least the local outer surfaces of the airflow modifying elements. The additional outer layer and/or additional intermediate layer may be terminated, e.g. having a tapered profile, on the outer surface to form a substantially smooth transition. Alternatively, the additional outer layer and/or additional intermediate layer may extend further along the outer surface to form an additional erosion protection.

The leading edge device may be configured to provide an enhanced leading edge protection, thereby increasing the service intervals. This in turn reduces the downtime and increases the AEP. The estimated amount of erosion and wear may be taken into account when designing the leading edge device. For example, this may be achieved by increasing the total thickness of the erosion shield between the airflow modifying elements and/or forming the body of the airflow modifying elements of an erosion resistant material.

One object of the invention is additionally achieved by a method of installing a leading edge device on a wind turbine blade having a length of at least 35 meters measured between the blade root and the tip end, the method comprising the steps of:
- providing a leading edge device as described above,
- preparing a leading edge surface on at least blade section of the wind turbine blade for attachment of the leading edge device,
- positioning the leading edge device on said leading edge surface and attaching the leading edge device to said wind turbine blade.

This provides an alternative method of manufacturing a wind turbine blade with a complex leading edge profile. This eliminates the need for integrating the leading edge profile during manufacture of the blade shell, thereby saving time and costs. The wind turbine blade may thus be manufactured with a basic leading edge profile which may be modifying by attachment of the present leading edge device.

The present leading edge device may be attached to the wind turbine blade in a post-moulding step or before installation of the wind turbine blade. The present leading edge device may be attached by adhesion, welding, over-lamination or another suitable technique. This allows the aerodynamic performance to be improved and in turn an increased AEP.

According to one embodiment, the method further comprises the step of:
- removing an old leading edge device or an old erosion shield from the wind turbine blade prior to preparing said leading edge surface.

The present method also allows for a more versatile upgrade of existing wind turbine blades compared with conventional methods. This may be done by replacing an existing leading edge protection with the present leading edge device or by retrofitting the present leading edge device onto the existing wind turbine blade. This upgrade process may be done when performing a service operation on the wind turbine blade, hence the wind turbine blade can be upgraded without having to demount or replace the wind turbine blade. This saves time and cost when upgrading existing wind turbine blades.

The present method also allows for an improved way of modifying the leading edge profile and/or the profile of the airflow modifying elements. This may be done by simply attaching the present leading edge device onto an original profile, i.e. basic profile, of the wind turbine blade. Additionally or alternatively, this may be done by replacing a leading edge device having a first profile with a leading edge device having a second profile. For example, the first and second leading edge devices may have different numbers of airflow modifying elements. For example, the airflow modifying elements of the first and second leading edge devices may have different profiles and/or dimensions. This saves time and cost when modifying the aerodynamic profile of the wind turbine blade.

The present method may include an initial step of removing an old erosion shield or leading edge device from the leading edge surface. This may be done using any known techniques. The leading edge surface may afterwards be prepared for attachment of the present leading edge device. The preparation step may include repairing any cracks or failures in the leading edge surface, e.g. due to environmental erosion or delamination. The preparation step may further include any suitable surface preparation, such as sanding, chemical cleaning and/or application of a primer, to achieve a good capacity of adherence of the leading edge surface. Said capacity of adherence may in example, but not limited to, be determined by glossiness, roughness and/or surface tension.

Optionally, a recess may be formed in the leading edge surface for receiving the leading edge surface. The sides and bottom surface of the recess and/or the adjoining blade surface may be prepared for attaching the leading edge surface by adhesion, welding or over-lamination.

### Description of drawings

The invention is explained in detail below with reference to embodiments shown in the drawings, in which
- Fig. 1: shows a wind turbine,
- Fig. 2: shows an exemplary embodiment of the wind turbine blade having a base aerodynamic profile,
- Fig. 3: shows a leading edge device for attachment to the wind turbine blade with a first embodiment of the first and second edges,
- Fig. 4: shows the leading edge device with a second embodiment of the first and second edges,
- Fig. 5: shows the leading edge device configured for attachment to the tip end,
- Fig. 6: shows a second embodiment of the airflow modifying element,
- Fig. 7: shows a third embodiment of the airflow modifying element,
- Fig. 8: shows an alternative third embodiment of the airflow modifying element,
- Fig. 9: shows the wind turbine blade with a number of leading edge extending along the leading edge,
- Fig. 10: shows a cross-sectional view of a first embodiment of the erosion shield and the airflow modifying elements,
- Fig. 11: shows a cross-sectional view of a second embodiment of the erosion shield and the airflow modifying elements,
- Fig. 12: shows a cross-sectional view of a third embodiment of the erosion shield and the airflow modifying elements,
- Fig. 13: shows a cross-sectional view of a fourth embodiment of the erosion shield and the airflow modifying elements,
- Fig. 14: shows a cross-sectional view of a fifth embodiment of the airflow modifying elements, and
- Fig. 15: shows an exemplary method of installing the leading edge device on the wind turbine blade.

### List of references

- 1.: Wind turbine
- 2.: Wind turbine tower
- 3.: Nacelle
- 4.: Hub
- 5.: Wind turbine blades
- 6.: Pitch bearing
- 7.: Blade root
- 8.: Tip end
- 9.: Leading edge
- 10.: Trailing edge
- 11.: Blade shell
- 12.: Pressure side
- 13.: Suction side
- 14.: Blade root portion
- 15.: Aerodynamic blade portion
- 16.: Transition portion
- 17.: Blade length of wind turbine blade
- 18.: Chord length of wind turbine blade
- 19.: Leading edge device
- 20.: Erosion shield
- 21.: Airflow modifying elements
- 22.: First end
- 23.: Second end
- 24.: First edge
- 25.: Second edge
- 26.: Inner surface
- 27.: Outer surface
- 28.: Serrations
- 29.: Further airflow modifying element
- 30.: Body
- 31.: Inner layer
- 32.: Outer layer
- 33.: Profile
- 34.: Old erosion shield
- 35.: Old leading edge device
- 36.: Leading edge surface
- 37.: Recess

The listed reference numbers are shown in abovementioned drawings where no all reference numbers are shown on the same figure for illustrative purposes. The same part or position seen in the drawings will be numbered with the same reference number in different figures.

### Detailed description of the drawings

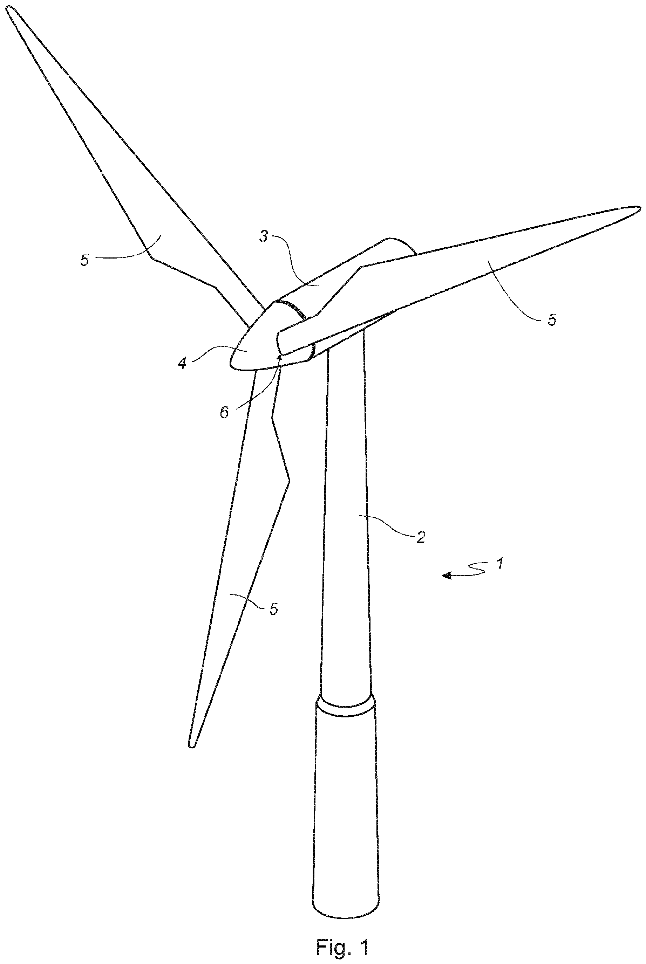

Fig. 1 shows a modern wind turbine 1 comprising a wind turbine tower 2, a nacelle 3 arranged on top of the wind turbine tower 2, and a rotor defining a rotor plane. The nacelle 3 is connected to the wind turbine tower 2, e.g. via a yaw bearing unit. The rotor comprises a hub 4 and a number of wind turbine blades 5. Here three wind turbine blades are shown, but the rotor may comprise more or fewer wind turbine blades 5. The hub 4 is connected to a drive train, e.g. a generator, located in the wind turbine 1 via a rotation shaft.

The hub 4 comprises a mounting interface for each wind turbine blade 5. A pitch bearing unit 6 is optionally connected to this mounting interface and further to a blade root of the wind turbine blade 5.

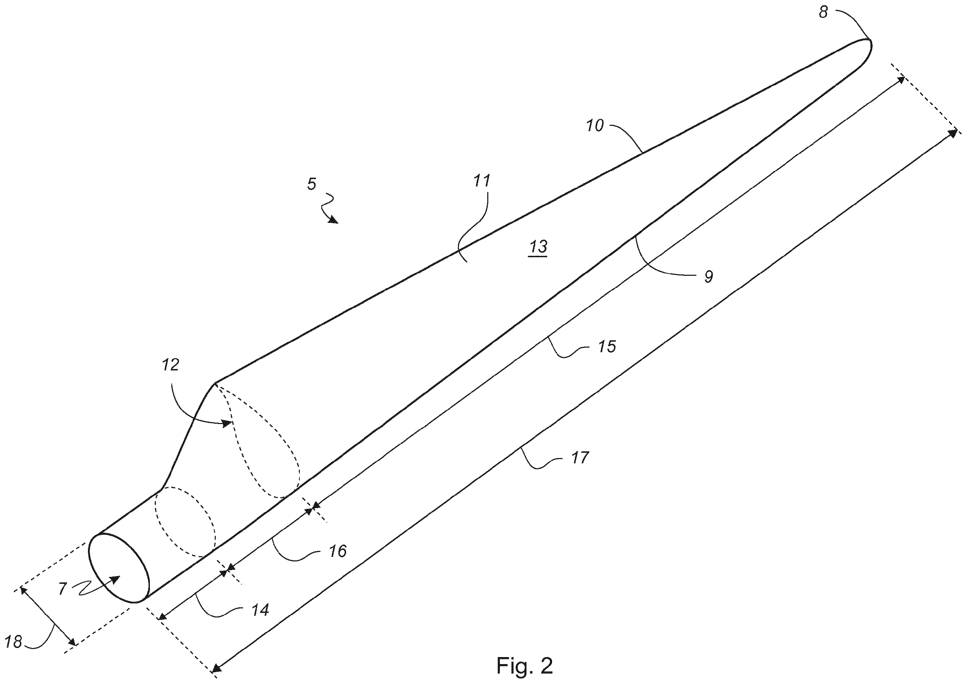

Fig. 2 shows a schematic view of the wind turbine blade 5 which extends in a longitudinal direction from a blade root 7 to a tip end 8. The wind turbine blade 5 further extends in a chordwise direction from a leading edge 9 to a trailing edge 10. The wind turbine blade 5 comprises a blade shell 11 having two opposite facing side surfaces defining a pressure side 12 and a suction side 13 respectively. The blade shell 11 further defines a blade root portion 14, an aerodynamic blade portion 15, and a transition portion 16 between the blade root portion 14 and the aerodynamic blade portion 15.

The blade root portion 14 has a substantially circular or elliptical cross-section (indicated by dashed lines). The blade root portion 14 together with a load carrying structure, e.g. a main laminate combined with a shear web or a box beam, are configured to add structural strength to the wind turbine blade 5 and transfer the dynamic loads to the hub 4. The load carrying structure extends between the pressure side 12 and the suction side 13 and further in the longitudinal direction.

The blade aerodynamic blade portion 15 has an aerodynamically shaped cross-section (indicated by dashed lines) designed to generate lift. The cross-sectional profile of the blade shell 11 gradually transforms from the circular or elliptical profile into the aerodynamic profile in the transition portion 16.

The wind turbine blade 5 has a blade length 17 of at least 35 metres, preferably at least 50 metres, measured in the longitudinal direction. The wind turbine blade 5 further has a chord length 18 as function of the blade length 17 measured in the chordwise direction, wherein the maximum chord length is found between the blade aerodynamic blade portion 15 and the transition portion 16.

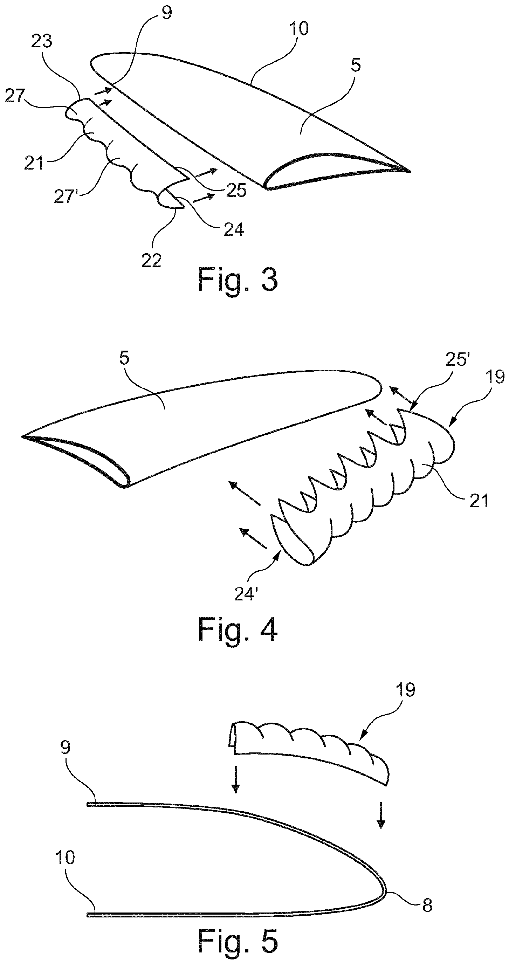

Fig. 3 shows a leading edge device 19 for attachment to the wind turbine blade 5 which comprises an erosion shield 20 and a number of airflow modifying elements 21. The erosion shield 20 extends from a first end 22 to a second end 23 in a longitudinal direction and further from a first edge 24 to a second edge 25 in a circumference direction.

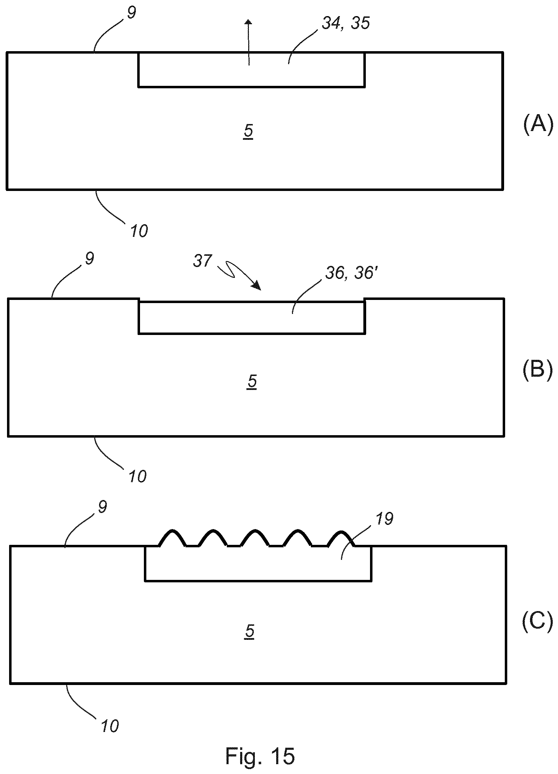

The erosion shield 20 has an inner surface 26 facing a leading edge surface (shown in fig. 15) of the wind turbine blade 5 and an opposite facing outer surface 27. The inner surface 26 is shaped to conform to the blade surface of the leading edge area.

The airflow modifying elements 21 project from the outer surface 27 and each have a local outer surface 27'. Each airflow modifying element 21 has a body with an aerodynamic profile having a local length, a local width and a local height.

Here, the first and second edges 24, 25 are formed as straight edges extending in the longitudinal direction of the leading edge device 19.

Fig. 4 shows the leading edge device 19 with a second embodiment of the first and second edges 24', 25'. Here, a number of serrations 28 are distributed along the longitudinal direction and project from the first and second edges 24', 25', respectively, towards the trailing edge 10. The serrations 28 are integrally formed by the erosion shield 20. The serrations 28 are shaped to improve the airflow over the first and second edges 24, 25.

The leading edge devices 19 of figs. 3 and 4 are configured to be attached to a part of the leading edge 9, preferably at a distance from the tip end 8 or the root end (shown in fig. 2). Fig. 5 shows an alternative position of the leading edge device 19. Here, the leading edge device 19 is configured to be attached to a tip end area. The leading edge device 19 may, for example, be arranged at the tip end 8 and extend towards the root end 7.

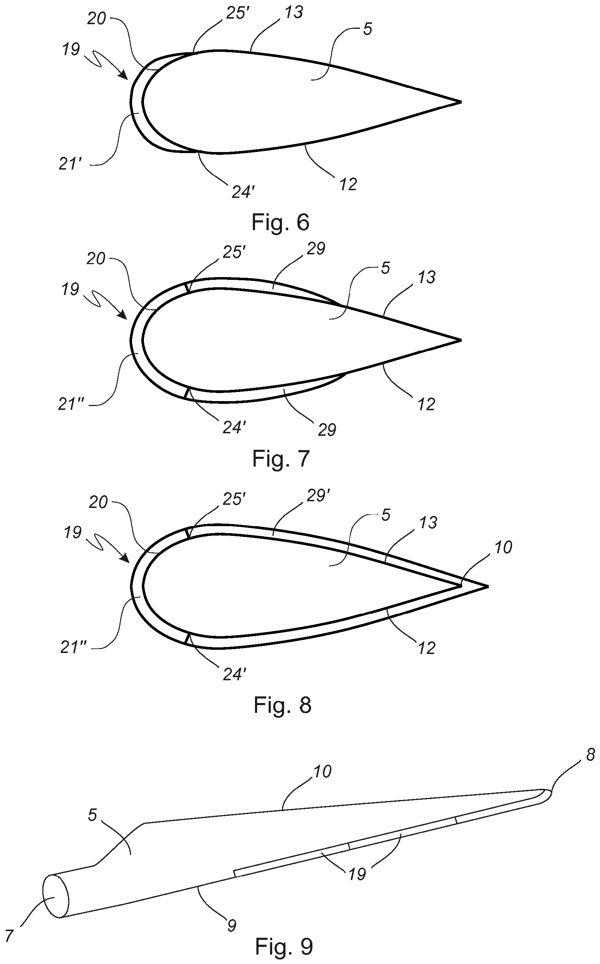

Fig. 6 shows a second embodiment of the airflow modifying element 21' of the leading edge device 19. Here, the airflow modifying element 21' extends substantially in the circumference direction from a local first edge 24 to a local second edge 25'. The local thickness of the airflow modifying element 21' tapers off towards the local first and second edges 24', 25', respectively.

The local first edge 24' is optionally aligned with the first edge 24 of the erosion shield 20. The local first edge 24' is positioned at a first chordwise length from the leading edge 9. Similarly, the local second edge 25' is optionally aligned with the second edge 25 of the erosion shield 20. The local second edge 25' is positioned at a second chordwise length from the leading edge 9.

Here, the local first and second edges 24', 25' are aligned in the chordwise direction, but may be offset relative to each other.

Fig. 7 shows a third embodiment of the airflow modifying element 21", wherein the airflow modifying element 21" form part of a combined airflow modifying element extending along a portion of the pressure and suction sides 12, 13. Here, a further airflow modifying element 29 is aligned with the local first edge 24' of the airflow modifying element 21". Further, another further airflow modifying element 29 is aligned with the local second edge 25' of the airflow modifying element 21". The airflow modifying element 21" together with the further airflow modifying elements 29 form the combined airflow modifying element. Thereby, extending the airflow modifying element towards the trailing edge 10.

Here, a further airflow modifying element 29 is arranged on both the pressure and suction sides 12, 13. However, the further airflow modifying element 29 may be arranged on only the pressure side 12 or the suction side 13.

In an alternative configuration, the further airflow modifying elements 29 form part of the airflow modifying element 21'.

Fig. 8 shows an alternative third embodiment of the airflow modifying element 21", wherein the further airflow modifying element 29' extend over the trailing edge 10 and further along a part of the pressure and suction sides 12, 13. Thereby, forming an airflow modifying element extending around the circumference of the wind turbine blade 5.

Fig. 9 shows the wind turbine blade 5 with a number of leading edge devices 19 extending along a portion of the leading edge 9. Here, a continuous leading edge device 19 or an array of leading edge devices 19 are positioned along the leading edge 9.

The leading edge devices 19 are arranged between 20% to 100%, preferably between 40% to 100%, of the blade length measured from the blade root 7.

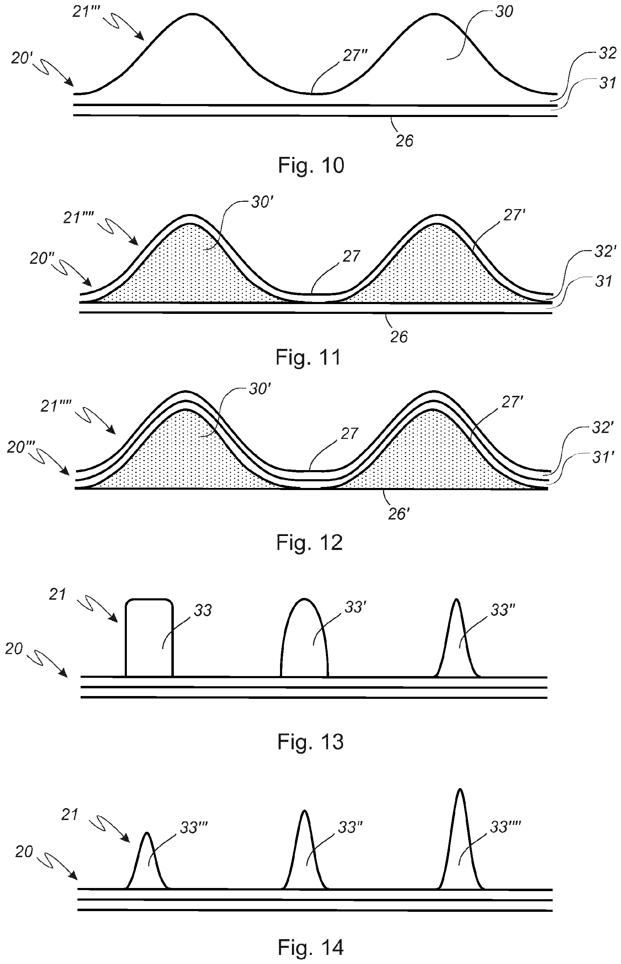

Fig. 10 shows a cross-sectional view of a first embodiment of the erosion shield 20' and the airflow modifying elements 21‴. Here, the erosion shield 20' comprises an inner layer 31 and an outer layer 32. The inner layer 31 extends along the inner surface 26.

The airflow modifying elements 21‴ are formed by a body 30 having a 3D-profile, as indicated in figs. 3-5, extending in the longitudinal direction, the thickness direction and further in the circumference direction. Here, the bodies 30 are shaped to as a continuous element forming the outer layer 32 of the erosion shield 30 wherein the body 30 forms a continuous outer surface 27".

The body 30 may alternatively be shaped to form the inner layer 31 instead.

Fig. 11 shows a cross-sectional view of a second embodiment of the erosion shield 20" and the airflow modifying elements 21"". Here, the body 30' is sandwiched between the outer layer 32' and the inner layer 31. The outer layers 32' extend along the inner layer 31 between the bodies 30' and further along the local outer surfaces 27' of each body 30.

Here, the bodies 30' are shaped apart by a distance to form the airflow modifying elements 21 "".

Fig. 12 shows a cross-sectional view of a third embodiment of the erosion shield 20‴ and the airflow modifying elements 21"". Here, the inner layer 31' and the outer layer 32' extend both over the local outer surfaces 27' of the bodies 30'.

The body 30' of the airflow modifying element 21ʺʺ is here arranged on the inner surface 26' so that it faces the leading edge surface (shown in fig. 15).

Fig. 13 shows a cross-sectional view of a fourth embodiment of the erosion shield 20 and the airflow modifying elements 21. Here, the airflow modifying elements 21 are formed by a body 33 having a 2D-profile, as indicated in figs. 6-8, extending in the thickness direction and further in the circumference direction.

As indicated in figs. 10-14, the leading edge device 19 comprises an array of airflow modifying elements 21 formed by the body 30, 33.

The body 33 has a substantially uniform profile along its local length. For example, the body 33 may have substantially rectangular profile, as indicated in fig. 13. The body 33' may also have a substantially round profile, e.g. semi-elliptical or semi-circular, as indicated in fig. 13. The body 33" may also have a substantially triangular profile, as indicated in fig. 13.

The erosion shield 20 is here formed as a multi-layered erosion shield comprising a number of layers arranged in a stack.

Here, the body of the airflow modifying element 21 is attached to the outer layer 32 of the erosion shield 20.

Fig. 14 shows a cross-sectional view of a fifth embodiment of the airflow modifying elements 21. Here, the dimensions of one or more of the airflow modifying elements 21 vary along the local length.

As illustrated, the local thickness of the bodies 33", 33‴, 33ʺʺ may vary from a minimum local thickness to a maximum local thickness. The dimensions and, optionally, the profile of the airflow modifying elements 21 are thus varied along the length of the wind turbine blade 5.

Fig. 15 shows an exemplary method of installing the leading edge device 19 on the wind turbine blade 5. The wind turbine blade 5 is preferably manufactured with a basic leading edge profile, as indicated in fig. 15.

Existing wind turbine blades 5 may be provided with an old leading edge protection, such as an erosion shield 34 or a leading edge device 35 with a basic profile, as indicated in fig. 15(a). When upgrading the wind turbine blade 5, the old erosion shield 34 or leading edge device 35 is removed (indicated by arrow) in an initial step.

Afterwards, any damages in the leading edge surface 36 are repaired and the leading edge surface 36 is then prepared for attachment of the leading edge device 19, as indicated in fig. 15(b).

Finally, the leading edge device 19 is then positioned on the leading edge surface 36 and attached to the wind turbine blade 5, as indicated in fig. 15(c).

If no leading edge protection exists, then any damages in the leading edge surface 36 are repaired and the leading edge surface 36 is then prepared for attachment of the leading edge device 19, as indicated in fig. 15(b).

For new wind turbine blades 5, the original leading edge surface 36' is prepared for attachment of the leading edge device 19 in a post-moulding process. This may include forming a recess 37 in the leading edge surface 36'. The leading edge device 19 is afterwards at least partly positioned in the recess 37 and subsequently attached to the wind turbine blade 5.

The abovementioned embodiments may be combined in any combinations without deviating from the present invention as defined by the appended claims.

## Claims

1. A wind turbine blade (5) for a wind turbine, the wind turbine blade (5) comprising at least one blade section extending in a longitudinal direction from a blade root or a tip end to an opposite end and further in a chordwise direction from a leading edge to a trailing edge, the wind turbine blade (5) having a length of at least 35 meters measured between the blade root and the tip end, wherein the wind turbine blade (5) has a first side surface defining a pressure side and a second side surface defining a suction side, wherein a leading edge surface is arranged between the first and second side surfaces, wherein a leading edge device (19) is arranged at said leading edge surface, wherein the leading edge device (19) comprises an erosion shield (20) extending in a longitudinal direction from a first end (22) to a second end (23) and further in a circumference direction from a first edge (24) to a second edge (25), wherein the erosion shield (20) has an inner surface (26) and an opposite facing outer surface (27) arranged between said first and second ends, wherein the erosion shield (20) is configured to be attached to a leading edge surface of the wind turbine blade (5), wherein the outer surface (27) faces away from the wind turbine blade (5) when the erosion shield (20) is attached to the leading edge surface of the wind turbine blade (5), **characterised in that** at least one airflow modifying element (21) projects from said outer surface (27), the at least one aerodynamic element having a first profile, wherein said at least one airflow modifying element (21) and said erosion shield (20) are integrally formed.

2. The wind turbine blade (5) according to claim 1, **characterised in that** said at least one airflow modifying element (21) extends along the outer surface (27) in at least the length or circumference direction, wherein said first profile has a local thickness extending from said outer surface (27) to a local outer surface (27) of the at least one airflow modifying element (21).

3. The wind turbine blade (5) according to claim 1 or 2, **characterised in that** said first profile forms a substantially two-dimensional shaped body (30) extending substantially in the circumference direction.

4. The wind turbine blade (5) according to claim 1 or 2, **characterised in that** said first profile forms a substantially three-dimensional shaped body (30) extending in the longitudinal direction and further in the circumference direction.

5. The wind turbine blade (5) according to claim 3 or 4, **characterised in that** said body (30) is covered with a protective coating and/or covered with a laminate of layers.

6. The wind turbine blade (5) according to any one of claims 1 to 5, **characterised in that** said at least one airflow modifying element (21) comprises an array of airflow modifying elements (21) arranged along the outer surface (27).

7. The wind turbine blade (5) according to claim 6, **characterised in that** the first profile of said array of airflow modifying elements (21) varies along the longitudinal direction and/or the circumference direction.

8. A method of installing a leading edge device on a wind turbine blade having a length of at least 35 meters measured between the blade root and the tip end, the method comprising the steps of:
- providing a leading edge device according to any one of claims 1 to 7,
- preparing a leading edge surface on at least blade section of the wind turbine blade for attachment of the leading edge device,
- positioning the leading edge device on said leading edge surface and attaching the leading edge device to said wind turbine blade.

9. The method according to claim 8, **characterised in that** the method further comprises the step of:
- removing an old leading edge device (19) or an old erosion shield (20) from the wind turbine blade (5) prior to preparing said leading edge surface.

## Patentansprüche

1. Windkraftanlagenflügel (5) für eine Windkraftanlage, wobei der Windkraftanlagenflügel (5) mindestens einen Flügelabschnitt umfasst, der sich in einer Längsrichtung von einem Flügelwurzel- oder einem Flügelspitzenende zu einem entgegengesetzten Ende und ferner in einer Sehnenrichtung von einer Eintrittskante zu einer Austrittskante erstreckt, wobei der Windkraftanlagenflügel (5) eine Länge, gemessen zwischen dem Flügelwurzel- und dem Flügelspitzenende, von mindestens 35 Metern aufweist, wobei der Windkraftanlageflügel (5) eine eine Druckseite definierende erste Seitenoberfläche und eine eine Saugseite definierende zweite Seitenoberfläche aufweist, wobei eine Eintrittskantenoberfläche zwischen der ersten und der zweiten Seitenoberfläche angeordnet ist, wobei eine Eintrittskantenvorrichtung (19) an der Eintrittskantenoberfläche angeordnet ist, wobei die Eintrittskantenvorrichtung (19) einen Erosionsschild (20) umfasst, der sich in einer Längsrichtung von einem ersten Ende (22) zu einem zweiten Ende (23) und ferner in einer Umfangsrichtung von einer ersten Kante (24) zu einer zweiten Kante (25) erstreckt, wobei der Erosionsschild (20) eine Innenoberfläche (26) und eine entgegengesetzt weisende Außenoberfläche (27) aufweist, die zwischen dem ersten und dem zweiten Ende angeordnet sind, wobei der Erosionsschild (20) dazu konfiguriert ist, an einer Eintrittskantenoberfläche des Windkraftanlagenflügels (5) angebracht zu werden, wobei die Außenoberfläche (27) von dem Windkraftanlagenflügel (5) weg weist, wenn der Erosionsschild (20) an der Eintrittskantenoberfläche des Windkraftanlagenflügels (5) angebracht ist, **dadurch gekennzeichnet, dass** mindestens ein Luftströmungsänderungselement (21) von der Außenoberfläche (27) vorsteht, wobei das mindestens eine aerodynamische Element ein erstes Profil aufweist, wobei das mindestens eine Luftströmungsänderungselement (21) und der Erosionsschild (20) einstückig gebildet sind.

2. Windkraftanlagenflügel (5) nach Anspruch 1, **dadurch gekennzeichnet, dass** sich das mindestens eine Luftströmungsänderungselement (21) entlang der Außenoberfläche (27) in mindestens der Längen- oder der Umfangsrichtung erststreckt, wobei das erste Profil eine örtliche Dicke aufweist, die sich von der Außenoberfläche (27) zu einer örtlichen Außenoberfläche (27) des mindestens einen Luftströmungsänderungselements (21) erstreckt.

3. Windkraftanlagenflügel (5) nach Anspruch 1 oder 2, **dadurch gekennzeichnet, dass** das erste Profil einen im Wesentlichen zweidimensional geformten Körper (30) bildet, der sich im Wesentlichen in der Umfangsrichtung erstreckt.

4. Windkraftanlagenflügel (5) nach Anspruch 1 oder 2, **dadurch gekennzeichnet, dass** das erste Profil einen im Wesentlichen dreidimensional geformten Körper (30) bildet, der sich in der Längsrichtung und ferner in der Umfangsrichtung erstreckt.

5. Windkraftanlagenflügel (5) nach Anspruch 3 oder 4, **dadurch gekennzeichnet, dass** der Körper (30) mit einer Schutzbeschichtung abgedeckt ist und/oder mit einem Laminat von Schichten abgedeckt ist.

6. Windkraftanlagenflügel (5) nach einem der Ansprüche 1 bis 5, **dadurch gekennzeichnet, dass** das mindestens eine Luftströmungsänderungselement (21) eine entlang der Außenoberfläche (27) angeordnete Anordnung von Luftströmungsänderungselementen (21) umfasst.

7. Windkraftanlagenflügel (5) nach Anspruch 6, **dadurch gekennzeichnet, dass** sich das erste Profil der Anordnung von Luftströmungsänderungselementen (21) entlang der Längsrichtung und/oder der Umfangsrichtung verändert.

8. Verfahren zum Installieren einer Eintrittskantenvorrichtung an einem Windkraftanlagenflügel mit einer Länge, gemessen zwischen dem Flügelwurzel- und dem Flügelspitzenende, von mindestens 35 Metern, wobei das Verfahren die folgenden Schritte umfasst:
- Bereitstellen einer Eintrittskantenvorrichtung nach einem der Ansprüche 1 bis 7,
- Vorbereiten einer Eintrittskantenoberfläche an mindestens einem Flügelabschnitt des Windkraftanlagenflügels zum Anbringen der Eintrittskantenvorrichtung,
- Positionieren der Eintrittskantenvorrichtung auf der Eintrittskantenoberfläche und Anbringen der Eintrittskantenvorrichtung an dem Windkraftanlagenflügel.

9. Verfahren nach Anspruch 8, **dadurch gekennzeichnet, dass** das Verfahren ferner den folgenden Schritt umfasst:
- Entfernen einer alten Eintrittskantenvorrichtung (19) oder eines alten Erosionsschilds (20) von dem Windkraftanlagenflügel (5) vor dem Vorbereiten der Eintrittskantenoberfläche.

## Revendications

1. Pale d'éolienne (5) pour une éolienne, la pale d'éolienne (5) comportant au moins une section de pale s'étendant dans une direction longitudinale depuis une extrémité de pied ou de bout de pale jusqu'à une extrémité opposée et par ailleurs dans une direction allant dans le sens de la corde depuis un bord d'attaque jusqu'à un bord de fuite, la pale d'éolienne (5) ayant une longueur mesurant au moins 35 mètres qui est mesurée entre l'extrémité de pied de pale et l'extrémité de bout de pale, dans laquelle la pale d'éolienne (5) a une première surface latérale définissant un côté en pression et une deuxième surface latérale définissant un côté en aspiration, dans laquelle une surface de bord d'attaque est agencée entre les première et deuxième surfaces latérales, dans laquelle un dispositif de bord d'attaque (19) est agencé au niveau de ladite surface de bord d'attaque, dans laquelle le dispositif de bord d'attaque (19) comporte un dispositif de protection contre l'érosion (20) s'étendant dans une direction longitudinale depuis une première extrémité (22) jusqu'à une deuxième extrémité (23) et par ailleurs dans une direction allant dans le sens de la circonférence depuis un premier bord (24) jusqu'à un deuxième bord (25), dans laquelle le dispositif de protection contre l'érosion (20) a une surface intérieure (26) et une surface extérieure orientée à l'opposé (27) qui sont agencées entre lesdites première et deuxième extrémité, dans laquelle le dispositif de protection contre l'érosion (20) est configuré pour être fixé sur une surface de bord d'attaque de la pale d'éolienne (5), dans laquelle la surface extérieure (27) est orientée à l'opposé de la pale d'éolienne (5) quand le dispositif de protection contre l'érosion (20) est fixé sur la surface de bord d'attaque de la pale d'éolienne (5), **caractérisée en ce qu'**au moins un élément de modification d'écoulement d'air (21) fait saillie depuis ladite surface extérieure (27), ledit au moins un élément aérodynamique ayant un premier profil, dans laquelle ledit au moins un élément de modification d'écoulement d'air (21) et ledit dispositif de protection contre l'érosion (20) sont formés d'un seul tenant.

2. Pale d'éolienne (5) selon la revendication 1, **caractérisée en ce que** ledit au moins un élément de modification d'écoulement d'air (21) s'étend le long de la surface extérieure (27) dans au moins la direction allant dans le sens de la longueur ou la direction allant dans le sens de la circonférence, dans laquelle ledit premier profil a une épaisseur locale s'étendant depuis ladite surface extérieure (27) jusqu'à une surface extérieure locale (27) dudit au moins un élément de modification d'écoulement d'air (21).

3. Pale d'éolienne (5) selon la revendication 1 ou la revendication 2, **caractérisée en ce que** ledit premier profil forme un corps à forme sensiblement bidimensionnelle (30) s'étendant sensiblement dans la direction allant dans le sens de la circonférence.

4. Pale d'éolienne (5) selon la revendication 1 ou la revendication 2, **caractérisée en ce que** ledit premier profil forme un corps à forme sensiblement tridimensionnelle (30) s'étendant dans la direction longitudinale et par ailleurs dans la direction allant dans le sens de la circonférence.

5. Pale d'éolienne (5) selon la revendication 3 ou la revendication 4, **caractérisée en ce que** ledit corps (30) est recouvert d'un revêtement de protection et/ou recouvert d'un stratifié de couches.

6. Pale d'éolienne (5) selon l'une quelconque des revendications 1 à 5, **caractérisée en ce que** ledit au moins un élément de modification d'écoulement d'air (21) comporte une série d'éléments de modification d'écoulement d'air (21) agencés le long de la surface extérieure (27).

7. Pale d'éolienne (5) selon la revendication 6, **caractérisée en ce que** le premier profil de ladite série d'éléments de modification d'écoulement d'air (21) varie le long de la direction longitudinale et/ou de la direction allant dans le sens de la circonférence.

8. Procédé d'installation d'un dispositif de bord d'attaque sur une pale d'éolienne ayant une longueur mesurant au moins 35 mètres qui est mesurée entre l'extrémité de pied de pale et l'extrémité de bout de pale, le procédé comportant les étapes consistant à :
- mettre en oeuvre un dispositif de bord d'attaque selon l'une quelconque des revendications 1 à 7,
- préparer une surface de bord d'attaque sur au moins une section de pale de la pale d'éolienne à des fins de fixation du dispositif de bord d'attaque,
- positionner le dispositif de bord d'attaque sur ladite surface de bord d'attaque et fixer le dispositif de bord d'attaque sur ladite pale d'éolienne.

9. Procédé selon la revendication 8, **caractérisé en ce que** le procédé comporte par ailleurs l'étape consistant à :
- retirer un ancien dispositif de bord d'attaque (19) ou un ancien dispositif de protection contre l'érosion (20) de la pale d'éolienne (5) avant de préparer ladite surface de bord d'attaque.
